# EUROPEAN PATENT SPECIFICATION

(11) **EP 1 870 365 B1**
(45) Date of publication and mention of the grant of the patent: **11.11.2009**
(21) Application number: 05759566.2
(22) Date of filing: 04.07.2005
(51) Int. Cl.: B65H 75/34, B05B 15/00, F16D 11/00, H02K 5/00

(54) **ELECTRIC HOSE WINDER**
ELEKTRISCHE SCHLAUCHAUFWICKELVORRICHTUNG
ENROULEUR ELECTRIQUE DE TUYAU

(30) Priority: 13.04.2005 CN 200520101572 U
(43) Date of publication of application: 26.12.2007
(73) Proprietor: Xu, Xiaohua, Dongyang, Zhejiang 322100 (CN)
(72) Inventor: Xu, Xiaohua, Dongyang, Zhejiang 322100 (CN)
(74) Representative: Elzaburu Marquez, Alberto
(86) International application number: PCT/CN2005/000974
(87) International publication number: WO 2006/108327

(56) References cited:
- EP-A- 0 087 544
- CN-Y- 2 493 303
- CN-Y- 2 622 138
- DE-U1- 20 300 805
- DE-U1- 20 304 085
- DE-U1- 29 706 707
- FR-A- 2 603 270
- JP-A- 05 058 547
- US-A- 2 573 868
- US-A- 4 721 833
- US-A- 4 993 449
- US-A- 5 238 200
- US-A- 5 402 551
- US-A- 5 402 551

## Description

### Technical Field

The present invention relates to a farm tool, especially an electric hose winder for winding water hose.

### Background of the invention

Chinese patent number 01232021.8 entitled "Motor-driven hose winder of sprayer" discloses a motor-driven hose winder that comprises a hose winding roller and a roller shaft. The shaft is a hollow shaft and is provided with a flexible interface in its cavity. The interface is composed of left and right joints and a sleeve mounted on the roller shaft, the left and right joints and the sleeve being sealed together. The sprayer hose is connected to the left and right joints. The hose needs to be wound manually to unwind it and thus it is inconvenient to use.

US-A-2 S73 868, which is considered to be the closest prior art document, discloses a hose reel of the type used on tank trucks in the delivery of fuel oil, gasoline and the like, with an electric motor for operating the hose reel, and comprises all the features of the preamble of claim 1. This solution solves the problem of requiring manual winding.

### Disclosure of the invention

The object of the preferred embodiments of the present invention is to provide a compact, light, low-cost, convenient and stable electric hose winder which is easy to operate.

The foregoing technical object of the invention is addressed by the underlying solution of the invention. In one form the invention comprises a frame and a hose winding roller rotatably supported on the frame. The said hose winding roller is constructed of two end-wheels and a connector provided with a drive motor. The drive motor is mounted on the frame by a hollow fixed shaft. The power line of the drive motor is introduced by way of the hollow structure of the fixed shaft and the drive motor output is connected to the hose winding roller by a clutch. The clutch is a mechanical one employing gear or a worm-gear mechanism. The drive motor output gear engages the clutch gear, which is rotatably disposed outside the fixed shaft. One end-wheel shaft of the said hose winding roller is positioned outside the gear shaft of the clutch. A shift stick is provided on the gear shaft and an L-slot on the end-wheel shaft, and the shift stick traverses the L-slot and can slide within the L-slot. The stick is shifted to engage the clutch gear and the output gear, at the same time the stick also acts to connect the clutch gear shaft to the end-wheel shaft and turn the hose winding roller and thus facilitate unwinding the water hose.

This arrangement makes it easier to unwind the water hose and lightens the work load by using the drive motor to drive the hose winding roller. It also makes the structure of the hose winder more compact and reduces its size by disposing the drive motor inside the connector of the winding roller, and it additionally can prevent twisting during rotation of the hose winding roller by guiding the power line of the drive motor from the hollow fixed shaft.

When the motor stops rotating, engagement between the drive motor output gear and the clutch gear can prevent the hose winding roller from turning, such that the water hose is kept at a certain length, and when the stick is shifted to disengage the clutch gear Horn the drive motor output gear, the hose winding roller is free, and the hose winding roller and the fixed shaft of the drive motor can rotate relative to each other to stretch the water hose.

Preferably a return spring is provided between the clutch gear shaft end and its mounting position, and the return spring has potential energy to push the clutch gear to engage the drive motor output gear. The return spring helps to shift the stick to engage the clutch gear and the drive motor output gear, thus making operation of the hose winder easier and more convenient.

Preferably a flexible joint is provided at the other end of the said hose winding roller. The said flexible joint is composed of a rotator and a stator each being hollow in structure. The rotator and stator are connected by a lock nut and can rotate around the stator axis. The said stator is mounted on the frame and connected to the water hose, while the said rotator traverses the central hole and is connected to the water hose on the hose winding roller. There is provided a flexible joint between the inlet hose and the water hose wound on the hose winding roller, to prevent twisting of the water hose during rotation of the hose winding roller, thereby making the structure of the hose winder more compact. The flexible joint can take the form of other widely known flexible linking means.

Preferably the said connector is composed of a number of link levers which are evenly positioned around the central axis of the two end-wheels. The two ends of the link lever are fixed to the two end-wheels, and the link levers are positioned relative to one each other by an annular body. The link lever may reduce the weight of the hose winder, so as to make the hose winder lighter and make packing and transport more convenient, and decrease manufacturing cost as well.

Preferably the said end-wheel is composed of a central core disk, a peripheral annulus and spokes disposed between the annulus and the core disk, and there are several holes in the core disk. The structure of the end-wheel can reduce the weight of the hose winder, thereby making it lighter and more convenient to pack and transport.

Preferably there is provided a control box that controls the drive motor on one side of the frame and there is provided a switch button on the control box. Operation of the drive motor can be controlled via the switch button on the control box.

Preferably the said frame is composed of a base and a bracket. The said base is rectangular in shape and there is a bracket fixed at either end of the base. The base can lower the centre of gravity of the hose winder, making it more stable and less likely to turn over during use.

Preferably the said drive motor is mounted on the fixed shaft via the central part of a fixing plate disposed in front of it. The drive motor output is offset relative to the central part of the fixing plate of the motor. On the fixing plate there is provided a through-hole which is in communication with the hollow structure of the fixed shaft. The said power line enters into the hollow structure of the fixed shaft through the hole.

Therefore, embodiments of the invention possess the attributes of compactness, lightness, low cost, convenience and stability. Employing the drive motor to drive the hose winding roller makes it easier to unwind the water hose and reduce the work load, disposing the drive motor in the connector of the winding roller makes the structure of the hose winder more compact and smaller in size, and guiding the power line of the drive motor through the hollow structure of the fixed shaft prevents twisting during rotation of the hose winding roller.

### Description of the drawings

FICi 1 is a perspective view of the invention;
FIG2 is a perspective view of the assembly structure between the clutch gear and the drive motor output gear of the invention;
FIG3 is a cross-sectional view of the clutch gear, the end-wheel, the fixed shaft and the drive motor;
FIG4 is a perspective view of the invention from another angle;
FIG5 is a perspective view of the hose winding roller of the invention;
FIG6 is a perspective view of the frame of the invention;
FIG7 is a plan view of the flexible joint of the invention;
FIG8 is a cross-sectional view along line C-C in FIG7.

### Detailed description of certain embodiments

The invention is described in detail below by way of embodiments with reference to the drawings.

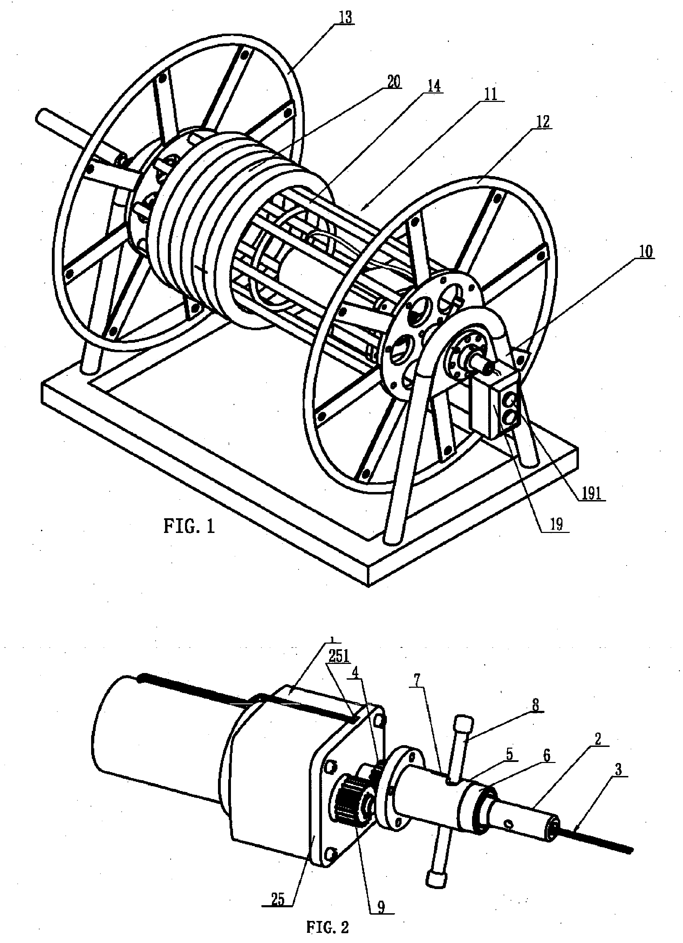

As Fig 1, Fig 2, Fig 3, Fig 5 and Fig 6 show, a hose winding roller 11 is rotatably supported on a frame 10. On one side of frame 10, there is provided a control box 19 which controls a drive motor 1, and on the control box there is provided a switch button 191. Hose winding roller 11 is composed of two end-wheels 12, 13 and a connector 14 in which drive motor 1 is situated. Drive motor 1 is fixed on fixed shaft 2 which is mounted on frame 10 via the central part of a drive motor-fixing plate disposed in front of it. Drive motor output gear 9 is offset relative to the central part of drive motor-fixing plate 25. On fixing plate 25 there is provided a through-hole 251 communicating with the hollow structure of fixed shaft 2. Power line 3 of drive motor 1 is brought through the hollow structure of fixed shaft 2 and guided out via through-hole 251 to connect with the drive motor. Output gear 9 of drive motor 1 engages with clutch gear 4, which is rotatably disposed outside of fixed shaft 2. Shaft 5 of one end-wheel 12 of the said hose winding roller 11 is positioned outside clutch gear shaft 6. A return spring 15 is provided between the end of clutch gear shaft 6 and its mounting position, and return spring 15 has potential energy to push clutch gear 4 to engage drive motor output gear 9. A shift stick 8 is provided on gear shaft 6 of the clutch and an L-shaped slot 7 on end-wheel shaft 5, and shift stick 8 passes through the L-slot and can slide within L-slot 7, so as to control engagement of clutch gear 4 and output gear 9 of drive motor 1. The stick 8 is shifted to engage the clutch gear 4 and the output gear 9, at the same time the stick 8 also acts to connect the clutch gear shaft 6 with the end-wheel shaft 5 and turn the hose winding roller 11 so as to facilitate unwinding the water hose 20. When the motor 1 stops rotating, the engagement between the drive motor output gear 9. and the clutch gear 4 can prevent the hose winding roller I from turning so that the water hose 20 is kept at a certain length, and when the stick 8 is shifted to disengage the clutch gear 4 from the drive motor output gear 9, the hose winding roller11 is free, thereby easing stretching of the water hose 20 and allowing it to be wound by hand when supply is cut off.

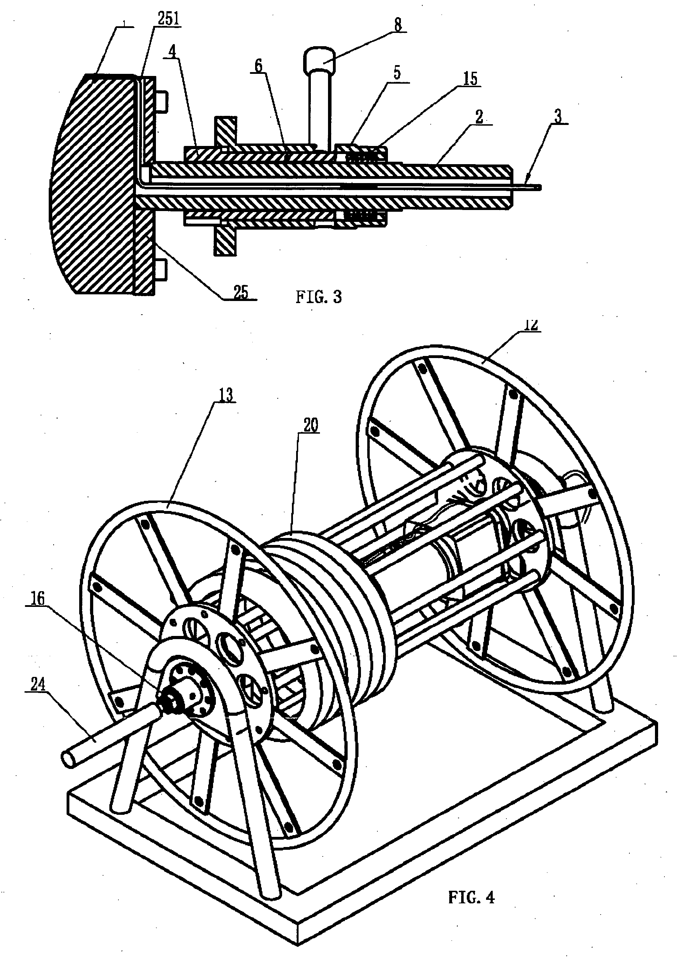

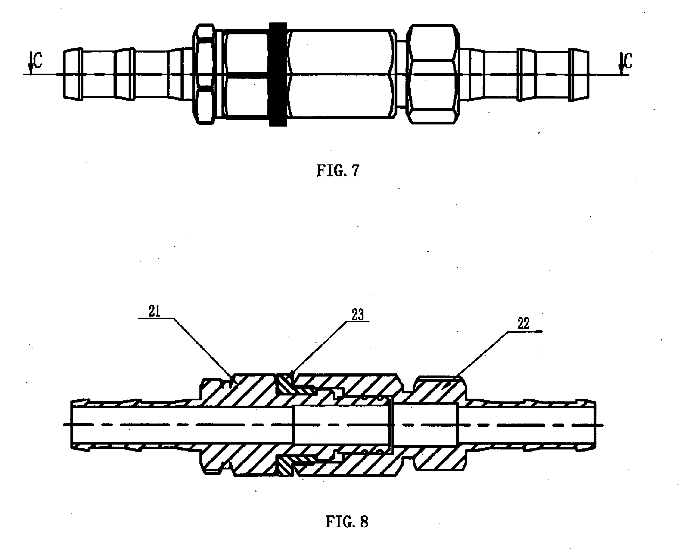

As Fig 4, Fig 7 and Fig 8 show, a flexible joint 16 is provided at the other end of hose winding roller 11. Flexible joint 16 is composed of a rotator 21 and a stator 22, each hollow in structure. Rotator 21 and stator 22 are connected by a lock nut 23 and can rotate around stator axis 22. Stator 22 is fixed on the frame 10 and connected to inlet hose 24, while the said rotator 21 traverses the central through-hole and is connected to water hose 20 wound on the hose winding roller 11. A flexible joint 16 is provided between the inlet hose and the water hose 20 wound on the hose winding roller l to prevent twisting of the water hose 20 when the hose winding roller 11 turns, making the hose winder more compact in structure.

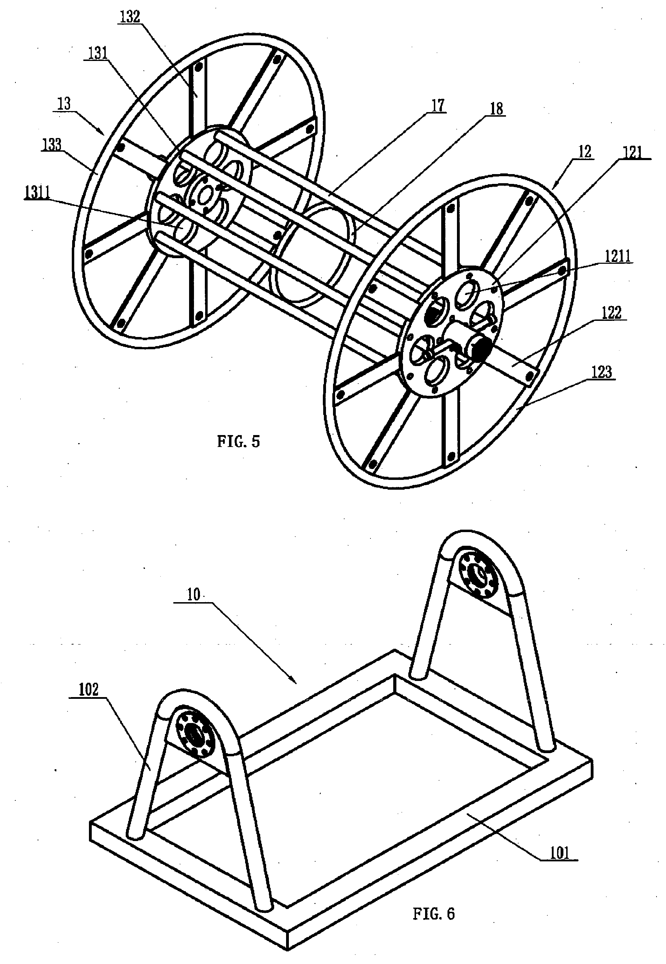

As Fig 5 shows, connector 14 is composed of a number of link levers 17 which are evenly positioned around the central axis of the two end-wheels 12,13. The two ends of link lever 17 are fixed separately on the two end-wheels 12,13, and the link levers 17 are positioned relative to each other via an annular body 18.

End-wheels 12,13 are composed of central core disks 121,131, peripheral annuluses 123,133, and spokes 122,132 disposed between annuluses 123,133 and core disks 121, 131. There are several through-holes 1211,1311 on the core disks. As Fig 6 shows, frame 10 is composed of a base 101 and a bracket 102. The said base 101 is a rectangular structure and brackets 102 are attached at either end of base 101.

## Claims

1. An electric hose winder comprising a frame (10) and a hose winding roller (11) rotatably supported on the frame(10), the said hose winding roller (11) comprising two end-wheels (12, 13) and a connector (14) that connects the two end-wheels (12, 13), a drive motor(1) being provided inside the connector (14), the drive motor (1) being mounted on the frame (10) at a first end of the hose winding roller (11) via a hollow fixed shaft (2), a power line (3) being brought in to the drive motor (1) by way of the hollow structure of the fixed shaft (2), a drive motor output being connected to one end-wheel (12) of the hose winding roller (11) by a clutch,
**characterized in that**: a drive motor output gear (9) engages a clutch gear (4), said clutch gear (4) being rotatably disposed outside the fixed shaft (2), an end-wheel shaft (5) of one end-wheel (12) of the said hose winding roller (11.) being positioned outside the clutch gear shaft (6) to which the clutch gear (4) is fixed, a shift stick (8) is provided on the gear shaft(6) and an L-slot (7) on the end-wheel shaft (5), and the shift stick (8) traverses and can slide within the L-slot (7), such that the stick (8) is shifted to engage the .clutch gear (4) and the output gear (9), and at the same time the stick (8) also acts to connect the clutch gear shaft (6) with the end-wheel shaft (5) and turn the hose winding roller (11) so as to facilitate unwinding the water hose (20).

2. The electric hose winder according to claim 1, **characterized in that**: a return spring (15) is provided between the clutch gear shaft (6) end and its mounting position, and the return spring has potential energy to bias the clutch gear (4) to engage the drive motor output gear (9).

3. The electric hose winder according to claims 1 or 2, **characterized in that**: a flexible joint (16) is provided on a second end of the said hose winding roller(11), and the said flexible joint (16) comprises a rotator (21) and a stator (22), each being hollow, the rotator (21) and the stator (22) being connected by a lock nut (23) and both being able to rotate around an axis of the stator (22), the said stator (22) being fixed on the frame (10) and connected to an inlet hose (24), while the said rotator (21) traverses the central through-hole of the second end-wheel (13) and is connected to a water hose (20) wound on the hose winding roller (11).

4. The electric hose winder according to claims 1 or 2, **characterized in that**: the said connector (14) comprises a plurality of link levers (17) which are evenly positioned around a central rotational axis of the two end-wheels (12, 13) and the two ends of the said link levers (17) are fixed respectively to the two end-wheels (12, 13), the said link levers (17) being positioned relative to each other by an annular body (18).

5. The electric hose winder according to claims 1 or 2, **characterized in that**: both of the end-wheels (12, 13) comprise a central core disk (121, 131), a peripheral annulus (123, 133) and spokes disposed between the annulus (123, 133) and the core disk (121, 131), and the said core disks (121, 131) comprise several through-holes(1211, 1311).

6. The electric hose winder according to claims 1 or 2, **characterized in that**: a control box (19) is provided on one side of the frame (10) which controls the said drive motor (1), there being provided a switch button (191) on the control box (19).

7. The electric hose winder according to claims 1 or 2, **characterized in that**: the said frame (10) comprises a base (101) and two brackets (102), the said base (101) being rectangular in shape having a bracket (102) fixed at either end.

8. The electric hose winder according to claims 1 or 2 or 3, **characterized in that**: the said drive motor (1) is mounted on fixed shaft (2) via the central part of a drive motor-fixing plate (25) disposed in front of it, the drive motor output is offset relative to the central part of drive motor-fixing plate (25), and on the said fixing plate (25) there is provided a through-hole (251) that communicates with the hollow structure of fixed shaft (2), and the said power line enters the hollow structure of the fixed shaft (2) by way of through-hole (251).

## Patentansprüche

1. Elektro-Schlauchwickler mit einem Rahmen (10) und einer am Rahmen (10) drehbar gelagerten Schlauchwickelrolle (11), wobei die Schlauchwickelrolle (11) zwei Endräder (12, 13) und einen Verbinder (14) aufweist, der die beiden Endräder (12, 13) verbindet, ein Antriebsmotor (1) innerhalb des Verbinders (14) vorgesehen ist, der Antriebsmotor (1) am Rahmen (10) an einem ersten Ende der Schlauchwickelrolle (11) über eine feststehende Hohlachse (2) angeordnet ist, eine Stromleitung (3) über den Hohlaufbau der feststehenden Achse (2) in den Antriebsmotor (1) geführt ist und ein Antriebsmotorausgang mit einem Endrad (12) der Schlauchwickelrolle (11) durch eine Kupplung verbunden ist,
**dadurch gekennzeichnet, daß** ein Antriebsmotorausgangsritzel (9) in ein Kupplungsritzel (4) eingreift, wobei das Kupplungsritzel (4) außerhalb der feststehenden Achse (2) drehbar angeordnet ist und eine Endradwelle (5) eines Endrads (12) der Schlauchwickelrolle (11) außerhalb der Kupplungsritzelwelle (6) positioniert ist, an der das Kupplungsritzel (4) befestigt ist, ein Schalthebel (8) an der Ritzelwelle (6) und ein L-Schlitz (7) an der Endradwelle (5) vorgesehen ist, wobei der Schalthebel (8) den L-Sohlitz (7) durchläuft und darin so gleiten kann, daß der Hebel (8) verschoben wird, um das Kupplungsritzel (4) und das Ausgangsritzel (9) in Eingriff zu bringen, und der Hebel (8) gleichzeitig so wirkt, daß er die Kupplungsritzelwelle (6) mit der Endradwelle (5) verbindet und die Schlauchwickelrolle (11) dreht, um Abwickeln des Wasserschlauchs (20) zu erleichtern.

2. Elektro-Schlauchwickler nach Anspruch 1, **dadurch gekennzeichnet, daß** eine Rückstellfeder (15) zwischen dem Ende der Kupplungsritzelwelle (6) und ihrer Anordnungsposition vorgesehen ist und die potentielle Energie der Rückstellfederso bemessen ist, daß das Kupplungsritzel (4) vorgespannt wird, um in Eingriff mit dem das Antriebsmotorausgangsritzel (9) zu kommen.

3. Elektro-Schlauchwickler nach Anspruch 1 oder 2, **dadurch gekennzeichnet, daß**: ein flexibles Gelenk (16) an einem zweiten Ende der Schlauchwickelrolle (11) vorgesehen ist und das flexible Gelenk (16) einen Rotor (21) und einen Stator (22) aufweist, die jeweils hohl sind, wobei der Rotor (21) und der Stator (22) durch eine Kontermutter (23) verbunden und beide fähig sind, um eine Achse des Stators (22) zu drehen, und der Stator (22) am Rahmen (10) befestigt und mit einem Einlaufschlauch (24) verbunden ist, während der Rotor (21) das Mitteldurchgangsloch des zweiten Endrads (13) durchläuft und mit einem Wasserschlauch (20) verbunden ist, der auf der Schlauchwickelrolle (11) aufgewickelt ist.

4. Elektro-Schlauchwickler nach Anspruch 1 oder 2, **dadurch gekennzeichnet, daß** der Verbinder (14) mehrere Gestängehebel (17) aufweist, die um eine Mitteldrehachse der beiden Endräder (12, 13) gleichmäßig positioniert sind, und die beiden Enden der Gestängehebel (17) jeweils an den beiden Endrädern (12, 13) befestigt sind, wobei die Gestängehebel (17) durch einen Ringkörper (18) relativ zueinander positioniert sind.

5. Elektro-Schlauchwickler nach Anspruch 1 oder 2, **dadurch gekennzeichnet, daß** beide Endräder (12, 13) eine Mittelkernscheibe (121, 131), einen Umfangsring (123, 133) sowie zwischen dem Ring (123, 133) und der Kernscheibe (121, 131) angeordnete Speichen aufweisen und die Kernscheiben (121, 131) mehrere Durchgangslöcher (1211, 1311) aufweisen.

6. Elektro-Schlauchwickler nach Anspruch 1 oder 2, **dadurch gekennzeichnet, daß** ein Steuerkasten (19) auf einer Seite des Rahmens (10) vorgesehen ist, der den Antriebsmotor (1) steuert, wobei ein Schalttaster (191) am Steuerkasten (19) vorgesehen ist.

7. Elektro-Schlauchwickler nach Anspruch 1 oder 2, **dadurch gekennzeichnet, daß** der Rahmen (10) einen Sockel (101) und zwei Halterungen (102) aufweist, wobei der Sockel (101) eine rechtwinklige Form mit einer an jedem Ende befestigten Halterung (102) hat.

8. Elektro-Schlauchwickler nach Anspruch 1 oder 2 oder 3, **dadurch gekennzeichnet, daß** der Antriebsmotor (1) an der feststehenden Achse (2) über das Mittelteil einer vor ihm angeordneten Antriebsmotor-Befestigungsplatte (25) angeordnet ist, der Antriebsmotorausgang relativ zum Mittelteil der Antriebsmotor-Befestigungsplatte (25) versetzt ist und an der Befestigungsplatte (25) ein Durchgangsloch (251) vorgesehen ist, das mit dem Hohlaufbau der feststehenden Achse (2) kommuniziert, und die Stromleitung über das Durchgangsloch (251) in den Hohlaufbau der feststehenden Achse (2) eintritt.

## Revendications

1. Enrouleur électrique de tuyau comprenant un cadre (10) et une bobine d'enroulement de tuyau (11) supportée pour tourner sur le cadre (10), ladite bobine d'enroulement de tuyau (11) comprenant deux roues d'extrémité (12, 13) et un élément de raccordement (14) qui raccorde les deux roues d'extrémité (12, 13), un moteur d'entraînement (1) étant prévu à l'intérieur de l'élément de raccordement (14), le moteur d'entraînement (1) étant monté sur le cadre (10) à une première extrémité de la bobine d'enroulement de tuyau (11) par l'intermédiaire d'un arbre fixe creux (2), une ligne d'alimentation (3) amenée au moteur d'entraînement (1) au moyen de la structure creuse de l'arbre fixe (2), la sortie du moteur d'entraînement étant reliée à une roue d'extrémité (12) de la bobine d'enroulement de tuyau (11) au moyen d'un embrayage,
**caractérisé en ce que** : un engrenage de sortie de moteur d'entraînement (9) vient en prise avec un pignon d'embrayage (4), ledit pignon d'embrayage (4) étant disposé pour tourner à l'extérieur de l'arbre fixe (2), un arbre de roue d'extrémité (5) d'une roue d'extrémité (12) de ladite bobine d'enroulement de tuyau (11) étant positionné à l'extérieur de l'arbre du pignon d'embrayage (6) auquel est fixé le pignon d'embrayage (4), une barre d'embrayage (8) est prévue sur l'arbre d'engrenage (6) et une fente en L (7) sur l'arbre de roue d'extrémité (5), et la barre d'embrayage (8) traverse la fente en L (7) et peut coulisser dans celle-ci, de sorte que la barre (8) est déplacée pour amener le pignon d'embrayage (4) en prise avec l'engrenage de sortie (9), et la barre (8) agit également en même temps pour relier l'arbre du pignon d'embrayage (6) avec l'arbre d'extrémité de roue (5) et pour faire tourner la bobine d'enroulement de tuyau (11) afin de faciliter le déroulement du tuyau d'eau (20).

2. Enrouleur électrique de tuyau selon la revendication 1, **caractérisé en ce que** : un ressort de rappel (15) est prévu entre l'extrémité de l'arbre du pignon d'embrayage (6) et sa position de montage, et le ressort de rappel a une énergie potentielle sollicitant le pignon d'embrayage (4) pour qu'il soit en prise avec l'engrenage de sortie du moteur d'entraînement (9).

3. Enrouleur électrique de tuyau selon les revendications 1 ou 2, **caractérisé en ce que** : un joint flexible (16) est prévu sur une seconde extrémité de ladite bobine d'enroulement de tuyau (11) et ledit joint flexible (16) comprend un rotor (21) et un stator (22), chacun étant creux, le rotor (21) et le stator (22) étant reliés par un écrou de blocage (23) et tous deux étant capables de tourner autour de l'axe du stator (22), ledit stator (22) étant fixé sur le cadre (10) et relié à un tuyau d'entrée (24) tandis que ledit rotor (21) traverse le trou traversant central de la seconde roue d'extrémité (13) et est relié à un tuyau d'eau (20) enroulé sur la bobine d'enroulement de tuyau (11).

4. Enrouleur électrique de tuyau selon les revendications 1 ou 2, **caractérisé en ce que** : ledit élément de raccordement (14) comprend une pluralité de barres de liaison (17) qui sont positionnées régulièrement autour de l'axe de rotation centrale des deux roues d'extrémité (12, 13) et les deux extrémités desdites barres de liaison (17) sont respectivement fixées au deux roues d'extrémité (12, 13), lesdites barres de liaison (17) étant positionnées les unes par rapport aux autres par un corps annulaire (18).

5. Enrouleur électrique de tuyau selon les revendications 1 ou 2, **caractérisé en ce que** : les roues d'extrémité (12, 13) comprennent toutes deux un disque central (121, 131), un anneau périphérique (123, 133) et des rayons disposés entre l'anneau (123, 133) et le disque (121, 131), et lesdits disques (121, 131) comprennent plusieurs trous traversants (1211, 1311).

6. Enrouleur électrique de tuyau selon les revendications 1 ou 2, **caractérisé en ce que** : une boîte de commande (19) commandant ledit moteur d'entraînement (1) est prévue sur un côté du cadre (10), un interrupteur (191) étant prévu sur la boîte de commande (19).

7. Enrouleur électrique de tuyau selon les revendications 1 ou 2, **caractérisé en ce que** : ledit cadre (10) comprend une base (101) et deux montants (102), ladite base (101) étant de forme rectangulaire, ayant un montant (102) fixé à chaque extrémité.

8. Enrouleur électrique de tuyau selon les revendications 1, 2 ou 3, **caractérisé en ce que** : ledit moteur d'entraînement (1) est monté sur l'arbre fixe (2) par l'intermédiaire de la partie centrale d'une plaque de fixation de moteur d'entraînement (25) disposée devant celui-ci, la sortie du moteur d'entraînement est décalée par rapport à la partie centrale de la plaque de fixation de moteur d'entraînement (25) et un trou traversant (251) est prévu sur ladite plaque de fixation (25), communiquant avec la structure creuse de l'arbre fixe (2) et ladite ligne d'alimentation pénètre dans la structure creuse de l'arbre fixe (2) au moyen du trou traversant (251).
